(19) Europäisches Patentamt
European Patent Office
Office européen des brevets

(11) Publication number: **0 210 706 B1**

(12) # EUROPEAN PATENT SPECIFICATION

(45) Date of publication of the patent specification: **27.12.89**

(51) Int. Cl.⁴: **C08F 212/12**

(21) Application number: **86201293.7**

(22) Date of filing: **22.07.86**

(54) **Resinous copolymer composition based on hydrocarbons and use thereof in adhesives and coatings.**

(30) Priority: **26.07.85 NL 8502135**

(43) Date of publication of application: **04.02.87 Bulletin 87/6**

(45) Publication of the grant of the patent: **27.12.89 Bulletin 89/52**

(84) Designated Contracting States: **AT BE CH DE FR GB IT LI NL SE**

(56) References cited:
**EP-A- 0 025 241**
**US-A- 3 956 250**
**US-A- 4 362 854**

(73) Proprietor: **DSM RESINS BV, Ceintuurbaan 5, NL-8022 AW Zwolle(NL)**

(72) Inventor: **Runavot, Yves, 204, Boulevard de Creteil, F-94100 Saint Maur des Fosses(FR)**
Inventor: **Thiot, André, 89 bis, Rue de Chailloit, F-95100 Argenteuil(FR)**
Inventor: **Salvetat, Jacques, 27, Avenue Corot, F-78110 Le Vesinet(FR)**

(74) Representative: **Hoogstraten, Willem Cornelis Roeland et al, OCTROOIBUREAU DSM Postbus 9, NL-6160 MA Geleen(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



ACTORUM AG

## Description

The invention relates to resinous copolymer compositions based on polymerized units of a vinylaromatic hydrocarbon monomer and at least one other hydrocarbon monomer having a copolymerizable unsaturation. Optionally, the copolymer composition may also contain one or more other copolymerizable compounds, chosen from the group formed by substituted benzene compounds, unsaturated carboxylic acid compounds and conjugated diene compounds.

The copolymers according to this invention are based in particular on polymerized units of a vinylaromatic hydrocarbon monomer and at least one other hydrocarbon monomer selected from the group comprising vinylaromatic compounds, dicyclopentadiene compounds, indene compounds and terpene compounds.

Such resinous copolymers are known from US-A-3956250, which discloses resinous compositions containing copolymers of α-methylstyrene and vinyltoluene.

Similar copolymers are known from US-A-3932332, which discloses copolymers containing of α-methylstyrene and styrene, from EP-A-23061, which discloses hydrocarbon resins based on dicyclopentadiene, a vinylaromatic hydrocarbon and a mono-, di-, or tri-substituted benzene, and from EP-A-25241, which discloses resins based on α-methylstyrene, styrene and phenol.

Resinous copolymer compositions of this type are known to have a relatively high softening point and good compatibility with natural or synthetic elastomers, and to have good peel strength, shear adhesion and tack, which makes them suitable for use in pressure-sensitive and hot-melt adhesives. However, the requirements posed with respect to these properties are becoming ever higher.

It has now been found that these properties, in particular the softening point and the compatibility, are considerably improved if paramethylstyrene is used as vinylaromatic comonomer.

The resinous copolymer composition according to the invention contains units of a vinylaromatic hydrocarbon monomer and at least one other hydrocarbon monomer having a copolymerizable unsaturation and is characterized in that said copolymer composition comprises at least 5% by weight of paramethylstyrene units, in a proportion at least equal to the amount of metamethylstyrene units, if any, present in said copolymer composition, said resinous composition having an average molecular weight of from 400 to 2000.

The resinous copolymer composition according to the invention in particular comprises preferably at least 25% by weight, and most preferably at least 40% by weight, of paramethylstyrene units.

The use of paramethylstyrene as (co)polymerizing monomer is discussed in Mobil Chemical Technical Bulletin, January 1982, which refers in particular to the replacement of vinyltoluene mixtures by paramethylstyrene in polyester based resin mixtures. This publication does not pertain to hydrocarbon resins and does not give any indication about the advantages of the present invention.

In view of the results obtaines with polyester resins, it is quite surprising that application of paramethylstyrene in tackifying hydrocarbon resins yields such considerable improvements with respect to the highly specific properties, as compatibility with rubbers, elastomers and ethylene-vinylacetate copolymers.

The other hydrocarbon monomer to be applied in combination with paramethylstyrene according to the invention, which contains a copolymerizable unsaturation, is selected in particular from the group comprising vinylaromatic compounds, dicyclopentadiene compounds, indene compounds and terpene compounds.

Vinylaromatic compounds that according to the invention may be used in combination with paramethylstyrene are, for instance, styrene, a-methylstyrene, metamethylstyrene, orthomethylstyrene, vinyltoluene (a mixture consisting of about 1/3 parts by weight paramethylstyrene and 2/3 parts by weight metamethylstyrene), or mixtures thereof. Use can be made of the pure compounds, but there is advantage in using the technical grades or concentrates with at least 60% by weight, or preferably 80% by weight, of one or more vinylaromatic compounds.

Dicyclopentadiene compounds that may be used according to the invention are, for instance, unsubstituted dicyclopentadiene and substituted dicyclopentadiene. The substituents may be chosen from, for instance, $C_1$-$C_{12}$ alkyl, hydroxyl and halogen. The dicyclopentadiene compounds may be applied in the form of the pure chemical compound, but there often is advantage in using a concentrate or a technical grade with 60 % by weight, or preferably 80 % by weight or more, of the compound.

Indene compounds that may be used according to the invention are, for instance, unsubstituted indene and substituted indene. The substituents may be chosen from, for instance, $C_1$-$C_{12}$ alkyl, hydroxyl and halogen. Here, too, concentrates or technical grades with 60 % by weight, or preferably 80 % or more by weight, of the compound may be used.

Terpene compounds according to the invention that may be used are, for instance, β-pinene, α-pinene, limonene, carene and compounds such as dipentenes. Mostly a concentrate or a technical grade with 60 % by weight, or preferably 80 % or more by weight, of a terpene compound may be used.

According to another embodiment of the invention, resins having an excellent compatibility with ethylene-vinylacetate copolymers are obtained if the hydrocarbon resin is 'alkylated', i.e. by incorporation of substituted benzene into the hydrocarbon resin. The substituted benzene compounds that may optionally be used in the copolymers according to the invention are preferably chosen from mono-, di-, and tri-substituted benzene, the substituents being chosen from $C_1$-$C_{12}$ alkyl, hydroxyl and halogen.

Examples of suitable substituted benzenes that are preferred are, for instance, phenols, which may have the following structural formula:

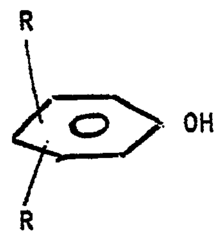

where R represents hydrogen or a $C_{1-12}$ alkyl group, preferably a $C_6$-$C_{10}$ alkyl group. They can be used in the form of technical-grade compounds (purity higher than 95 %). Depending on the nature and reactivity, some of the impurities may be incorporated in the resin.

For use in adhesives those resins are preferred which comprise a combination of a phenol and a $C_6$-$C_{10}$ monoalkyl phenol such as e.g. octylphenol.

Other examples of suitable substituted benzene compounds that are preferred include toluene, ethylbenzene, xylenes, mesitylene, trimethylbenzenes, and other $C_1$-$C_{12}$ alkylbenzenes. The amount of substituted benzene in the copolymers according to this optional embodiment of the invention preferably ranges from 2 to 15 % by weight and most preferably from 3 to 10 % by weight, of substituted benzene. Depending on the average molecular weight of the copolymers this corresponds to about 0.5 to 1.5, preferably 0.8 to 1.2 molecules of substituted benzene per average molecule of copolymer, so that the majority of the resin molecules are believed to contain a substituted benzene (i.e. an 'alkylated') group. The 'alkylating' agent may be present in the reaction mixture also in higher molar ratios than indicated above and partly act as a solvent, which is distilled off after termination of the reaction.

The copolymers according to the invention may optionally comprise units derived from an unsaturated carboxylic acid with preferably 2-6 C-atoms per molecule, such as those derived from, for instance, unsaturated monocarboxylic acids and $C_1$-$C_{12}$ alkylesters thereof, unsaturated dicarboxylic acids and acid anhydrides. Suitable examples are acrylic and methacrylic acids and their esters, such as in particular 2-ethylhexylacrylate, and maleic anhydride.

The amount of unsaturated acid compound in the copolymers according to this optional embodiment of the invention preferably range from 2 to 20 by weight, and most preferably from 3 to 10 % by weight.

The copolymers according to the invention, and notably the copolymers based on paramethylstyrene and dicyclopentadiene compounds, may optionally comprise units deriving from conjugated diene com pounds. Preferred diene compounds are, for instance, pentadiene, and most preferably piperylene, i.e. 1.3-pentadiene (cis and trans). Copolymers containing pentadiene, in particular piperylene, are preferred when a higher tack with respect to polyester and polyolefin substrates is desired. Pure piperylene can be used, but usually technical grade pentadiene or piperylene concentrates containing more than 45 % of pure pentadiene can be used, provided they contain less than 5 % of isoprene, the remainder being monoenes, dicyclopentadiene, methyl cyclopentadiene and non-polymerizable products.

The optional amount of diene compound in the copolymers according to the invention preferably ranges from 2 to 20 % by weight, and most preferably from 3 to 10 %.

According to a preferred embodiment of the invention, the resinous copolymer composition consists of paramethylstyrene together with at least one monomer chosen from the group formed by styrene, α-methylstyrene, vinyltoluene, dicyclopentadiene, indene and terpene.

Optionally, the copolymer composition may also contain one or more monomers chosen from the group consisting of pentadienes, unsaturated carboxylic acids and their $C_1$-$C_{12}$ alkyl esters, unsaturated dicarboxylic acids and acid anhydrides and mono-, di- or tri-substituted benzene, the substituents being chosen from $C_1$-$C_{12}$ alkyl, hydroxyl and halogen.

According to another preferred embodiment of the invention, the resinous copolymer composition consists of paramethylstyrene together with one or more comonomers from the group formed by styrene, α-methylstyrene and vinyltoluene. Optionally, the copolymer composition may also contain phenol and/or a $C_6$-$C_{10}$ alkyl-substituted phenol.

According to yet another preferred embodiment according to the invention, the resinous copolymer composition consists of paramethylstyrene together with dicyclopentadiene and with one or more comonomers from the group formed by phenol, $C_6$-$C_{10}$ alkyl phenols and $C_1$-$C_6$ alkyl benzenes.

Optionally, the copolymer composition may also contain one or more comonomers from the group formed by vinylaromatic compounds (excluding paramethylstyrene), pentadienes, in particular piperylene and $C_1$-$C_{12}$ alkylesters of acrylic and methacrylic acid.

The resins according to the invention usually show softening points (Ring & Ball according to ASTM E28) of about 100° to 120°C, which is extremely high compared with the softening points of the state of

the art resins, which are on the order of 70-90°C. The compatibility with elastomers, such as natural and synthetic rubbers, is excellent, giving typical cloud points below 30°C and even yielding clear mixtures at room temperature.

The average molecular weight of these resins ranges from about 400 to 2.000.

The resins according to the invention can be prepared by reacting, optionally in the presence of a hydrocarbon solvent, for instance methylcyclohexane or toluene, the desired amounts of starting materials and a small amount of a Friedel-Crafts type catalyst, for instance $BF_3$, $AlCl_3$, $TiCl_4$ or a complex thereof, with, for instance, ether or phenol, and keeping the reaction temperature between -10° and 80°C, preferably between 20° and 50°C.

The resinous copolymer composition according to the invention preferably is prepared at a temperature between -10 and 80°C, with

a. 5 to 90 parts by weight of paramethylstyrene;
b. 10 to 95 parts by weight of at least one other hydrocarbon having a copolymerizable unsaturation;
c. 0 to 15 parts by weight of (a) substituted benzene compound(s);
d. 0 to 20 parts by weight of conjugated diene compound; and
e. 0 to 20 parts by weight of unsaturated carboxylic acid compound being reacted in the presence of a Friedel-Crafts type catalyst.

This preparation may take place in the presence of a solvent.

According to a preferred embodiment according to the invention, paramethylstyrene is used in an amount between 40 and 90 parts by weight and the other hydrocarbon with a copolymerizable unsaturation in an amount between 10 and 60 parts by weight.

The substituted benzene compound(s), the conjugated diene compound and the unsaturated carboxylic acid compound may be used in a total amount between 0 and 10 parts by weight.

Slow additon of the catalyst -which is preferably $BF_3$ or a complex thereof- may be recommendable in view of the exothermic nature of the reaction. Special measures to control the temperature during the reaction may be required to secure good and reproducible technical results. The reaction mixture is normally kept for several hours at the desired reaction temperature (-10°C - 80°C), after which the catalyst is destroyed, preferably by addition of a base and washing, whereafter the volatiles, e.g. solvent and any unreacted starting material, are removed.

The resins according to the present invention can advantageously be used in adhesives, more particularly in hot-melt adhesvies which do not require the presence of organic solvents. The compatibility of the resin with rubber is excellent (50 : 50 mixtures).

In some instances elastomers like rubber and certain ethylene-vinylacetate copolymers (EVA), ethylacrylate copolymers (EEA) and amorphous polypropylene (APP) can be used, either in combination or separately, together with these resins in hot-melt pressure-sensitive adhesives.

The present invention also provides pressure-sensitive adhesives which are mixtures of a resin in accordance with the invention and an elastomer such as natural or synthetic rubber. As natural rubber crude gum can be used and as synthetic rubbers any thermoelastomer, such as styrene butadiene styrene (SBS) and e.g. styrene isoprene styreen (SIS) block copolymers.

The resins and elastomers can be combined in weight ratios of between 0.3 to 3 parts of resin per part of rubber, preferably between 0.5 and 2. Optional further ingredients such as waxes, tackifying oils (usually a naphthenic oil) and stabilizers against oxidation and ultraviolet light can be incorporated in minor amounts. The resin and rubber are melted at a temperature ranging from about 80° to 200°C and kept at this temperature for 10-30 minutes. Sometimes, better results are obtained by combining more than one type of rubber or more than one type of resin. The use of solvents (aliphatic or aromatic hydrocarbons, chlorinated derivatives thereof or e.g. ketones) is often superfluous, though the usual additives, such as anti-oxidants, fillers and the like, may be incorporated in minor amounts.

According to a preferred embodiment of the invention a hot-melt adhesive consists to 20–60% by weight of the resinous copolymer composition according to the invention.

In another preferred embodiment of the present invention hot-melt adhesives are provided, which comprise substantially a mixture of an ethylene-vinylacetate copolymer (EVA) containing at least 20 and at most 55% by weight of vinylacetate, and copolymeric hydrocarbon resin as described above, optionally with a microcrystalline and/or paraffin wax and/or a tackifying oil. The amounts by weight of hydrocarbon resin and EVA copolymer can range between 35 : 65 and 60 : 40, preferably between 40 : 60 and 50 : 50. The ethylene-vinylacetate copolymer to be applied contains 25 to 55%, preferably 28 to 50%, by weight of vinylacetate.

Mixing of resin and copolymer is effected in the melt at a temperature of 150–200°C, preferably 160–180°C for 15–60 minutes. Minor quantities of antioxidants may also be present. By this process hot-melt adhesives can be provided which are particularly suitable for packaging, bookbinding or the manufacture of disposables, such as diapers, sanitary towels, disposable dressings, packaging tapes, masking tapes for automobile windows, carpet-laying tapes, labels, floor, tiles, wall coverings, automobile upholstery, etc.

The non-pressure-sensitive hot melts as formulated herein are characterized by superior adhesion,

hot and cold resistance and stability and as such are suitable for packaging, bookbinding and non-pressure-sensitive disposables applications.

The resins according to the present invention can also advantageously be used in coatings. A preferred embodiment of the invention provides in coatings that consist of 3–15% by weight, preferably 5–10% by weight, resinous copolymer composition according to the invention,

2–10% by weight, preferably 4–6% by weight, ethylene-vinylacetate copolymer and

75–95% by weight wax, for instance paraffine wax.

The usual additives can be added.

The ethylene-vinylacetate copolymer can be replaced by other polymers, as long as they result in coatings with the same performance.

The invention is illustrated by the following examples.

Example I

60 parts by weight of paramethylstyrene and 31 parts by weight of alpha-methylstyrene were mixed with 9 parts by weight of phenol and dissolved in 120 parts by weight of toluene. Subsequently 0,25 wt.% of gaseous borontrifluoride ($BF_3$) was added to the reaction mixture, which was kept for 5 hours at 20°C. After this the catalyst was neutralized with NaOH and washed and the volatiles were distilled off. A resin I having a Ring and Ball softening point of 100°C (according to ASTM E28/67) and a Gardner colour below 1 was obtained. The copolymeric hydrocarbon resin was compatible with ethylene-vinylacetate copolymers containing 15-40 wt.% of vinylacetate, with microcrystalline waxes, paraffins, polyethylene waxes and natural and synthetic rubbers.

Example II

Using the procedure of Example I, a copolymer resin was prepared based on the following reaction mixtures:
45 parts by weight of paramethylstyrene
45 parts by weight of alpha-methylstyrene
parts by weight of phenol
120 parts by weight of toluene.
A resin II having a Ring and Ball softening point of 100°C ± 2° was obtained.

Comparative example 1

Copolymeric hydrocarbon resin based on vinyltoluene, alphamethylstyrene and phenol.
Using the procedure of Example I a resin was prepared based on the following reaction mixture:
60 parts by weight of vinyltoluene (i.e. 33 % paramethylstyrene 66% metamethylstyrene 0,3 % orthomethylstyrene)
31 parts by weight of alpha-methylstyrene
9 parts by weight of phenol
120 parts by weight of toluene.
A resin III having a Ring and Ball softening point of 83°C was obtained.

The compatibility of resins I, II and III with various ethylene vinylacetate copolymers (comprising about 15-30 wt.% vinylacetate) and with an acid EVA-terpolymer was tested.
The results are given in Table I.

Table I

Comparison of the compatibility of copolymers according to the invention and of state of the art copolymers with ethylene-vinylacetate copolymers (50 % by weight copolymer and 50 % by weight EVA).

Compatibility with:

| Resin | Softening Point | Elvax 250 (27/28% vinyl-acetate) | Elvax 360 (24/25% vinyl-acetate) | Elvax 40 (17/18% vinyl-acetate) | Elvax 4360 (acid terpolymer) |
|---|---|---|---|---|---|
| Resin I | 100 ¤C | clear at room T. | clear at room T. | clear at room T. | clear at room T. |
| Resin II | 100 ¤C | clear at room T. | clear at room T. | clear at room T. | clear at room T. |
| Resin III | 83 ¤C | clear at room T. | clear at 60 ¤ | white at room T. | cloudy at room T. |

Elvax is the trade mark of ethylene-vinylacetate copolymer products marketed by Dupont de Nemours.

Example III

Using the procedure of Example I a resin was prepared by polymerizing the following reaction mixture at a temperature between 40 and 45°C:

| | |
|---|---|
| – dicylopentadiene concentrate | |
| (83% DCPD) | 20 parts by weight |
| – paramethylstyrene | 21 parts by weight |
| – trimethylbenzene | 75 parts by weight |
| containing 0,4 wt.% boron trifluoride | |

A resin was obtained having a Ring and Ball softening point above 100°C and showing an excellent compatibility with an ethylene vinylacetate copolymers.

Example IV

Using the same procedure as in Example I, a resin was prepared by polymerizing the following reaction mixture at a temperature between 25 and 35°C:

| | |
|---|---|
| – dicylopentadiene concentrate | |
| (85% DCPD) | 30 parts by weight |
| – paramethylstyrene | 21 parts by weight |
| – phenol | 2,5 parts by weight |
| – octylphenol | 5,2 parts by weight |
| – 2-ethylhexylacrylate | 1,5 parts by weight |
| – piperylene concentrate | |
| (85% purity) | 24 parts by weight |
| – methylcyclohexane | 30 parts by weight |
| containing 0,5 wt.% boron trifluoride as catalyst | |

The resin obtained showed a Ring and Ball softening point of 95°C and had the following properties:
tack : 2 cm (according to PSTC-6 test method)
peel strength : at 180°, 600 grams per cm of ribbon (according to PSTC-1 test method)
shear adhesion: more than 24 hours (according to PSTC-7 test method).
(PSTC standing for: Pressure Sensitive Tape Council).

Example V

Using the same procedure as in Example I, a resin was prepared by polymerizing the following reaction mixture at a temperature of 25°C.

| | |
|---|---|
| – paramethylstyrene | 90 parts by weight |
| – phenol | 10 parts by weight |
| – toluene | 100 parts by weight |
| – $BF_3$ | 0.4 wt.% |

The resin, obtained in a yield of 90 %, had a Ring and Ball softening point of 140°C.

Comparative example 2

Using the same procedure as in Example V, a resin was prepared by polymerizing the following reaction mixture:

| | |
|---|---|
| – vinyltoluene | 90 parts by weight |
| – phenol | 10 parts by weight |
| – toluene | 100 parts by weight |
| – $BF_3$ | 0.4 wt.% |

The resin, obtained in a yield of 90 %, had a Ring and Ball softening point of 120°C.

## Claims

1. Resinous copolymer composition, suitable for adhesives and coatings, containing units of a vinylaromatic monomer and at least one other hydrocarbon monomer having a copolymerizable unsaturation, characterized in that said copolymer composition comprises at least 5% by weight of paramethylstyrene units, in a proportion at least equal to the amount of metamethylstyrene units, if any, present in said copolymer composition, said resinous composition having an average molecular weight of from 400 to 2000.

2. Resinous copolymer composition according to claim 1, characterized in that said copolymer composition comprises at least 25 % by weight of paramethylstyrene.

3. Resinous copolymer composition according to claim 2, characterized in that said copolymer composition comprises at least 40 % by weight of paramethylstyrene.

4. Resinous copolymer composition according to any of claims 1-3, characterized in that it consists of paramethylstyrene together with at least one monomer chosen from the group formed by styrene, α-methylstyrene, vinyltoluene, dicyclopentadiene, indene and terpene.

5. Resinous copolymer composition according to claim 4, characterized in that it contains paramethylstyrene together with one or more comonomers from the group formed by styrene, α-methylstyrene and vinyltoluene.

6. Resinous copolymer composition according to any of claims 1-4, characterized in that it contains paramethylstyrene together with dicyclopentadiene and with one or more comonomers from the group formed by phenol, $C_6$-$C_{10}$ alkylphenols and $C_1$-$C_6$ alkylbenzenes.

7. Process for the preparation of a resinous copolymer composition, characterized in that, at a temperature between -10 and 80°C,

a. 5 to 90 parts by weight of paramethylstyrene;
b. 10 to 95 parts by weight of at least one other hydrocarbon having a copolymerizable unsaturation;
c. 0 to 15 parts by weight of (a) substituted benzene compound(s);
d. 0 to 20 parts by weight of conjugated diene compound; and
e. 0 to 20 parts by weight of unsaturated carboxylic acid compound are reacted in the presence of a Friedel-Crafts type catalyst.

8. Process according to claim 7, characterized in that paramethylstyrene is used in an amount between 40 and 90 parts by weight and the other hydrocarbon with a copolymerizable unsaturation in an amount between 10 and 60 parts by weight.

9. Use as hot-melts adhesives of a resinous composition according to any of claims 1-6 or obtained by the process according to either of claims 7-8, in combination with an elastomer, a natural or synthetic rubber or an ethylene-vinylacetate copolymer with 20-55 % by weight vinylacetate, optionally in combination with a wax and/or a tackifying oil.

10. Hol-melt adhesive, characterized in that it consists to 20-60 % by weight, calculated on the total composition, of a resinous copolymer composition according to any of claims 1-6 or obtained by the process according to either of claims 7-8.

11. Coating, characterized in that it consists to 3-15 % by weight, calculated on the total composition, of a resinous copolymer composition according to any of claims 1-6, 2-10 % by weight ethylene-vinylacetate copolymer and 75-95 % by weight wax.

## Patentansprüche

1. Harzartige Copolymerzusammensetzung, die für Klebstoffe und Überzüge geeignet ist, enthaltend Einheiten eines vinylaromatischen Monomers und mindestens eines anderen Kohlenwasserstoffmonomers mit einer copolymerisierbaren Ungesättigtheit, dadurch gekennzeichnet, daß diese Copolymerzusammensetzung mindestens 5 Gew.% p-Methylstyroleinheiten in einem Anteil mindestens gleich der Menge von, wenn überhaupt, in der Copolymerzusammensetzung vorhandenen m-Methylstyroleinheiten umfaßt, wobei die harzartige Zusammensetzung ein mittleres Molgewicht von 400 bis 2000 aufweist.

2. Harzartige Copolymerzusammensetzung nach Anspruch 1, dadurch gekennzeichnet, daß die Copolymerzusammensetzung mindestens 25 Gew.% p-Methylstyrol umfaßt.

3. Harzartige Copolymerzusammensetzung nach Anspruch 2, dadurch gekennzeichnet, daß die Copolymerzusammensetzung mindestens 40 Gew.% p-Methylstyrol umfaßt.

4. Harzartige Copolymerzusammensetzung nach einem der Ansprüche 1 bis 3, dadurch gekennzeichnet, daß sie aus p-Methylstyrol zusammen mit mindestens einem Monomer ausgewählt aus der Gruppe bestehend aus Styrol, α-Methylstyrol, Vinyltoluol, Dicyclopentadien, Inden und Terpen besteht.

5. Harzartige Copolymerzusammensetzung nach Anspruch 4, dadurch gekennzeichnet, daß sie p-Methylstyrol zusammen mit einem oder mehreren Comonomeren aus der Gruppe bestehend aus Styrol, α-Methylstyrol und Vinyltoluol enthält.

6. Harzartige Copolymerzusammensetzung nach einem der Ansprüche 1 bis 4, dadurch gekennzeichnet, daß sie p-Methylstyrol zusammen mit Dicyclopentadien und mit einem oder mehreren Comonomeren aus der Gruppe bestehend aus Phenol, $C_6$–$C_{10}$-Alkylphenolen und $C_1$–$C_6$-Alkylbenzolen enthält.

7. Verfahren zur Herstellung einer harzartigen Copolymerzusammensetzung, dadurch gekennzeichnet, daß bei einer Temperatur von –10 bis 80°C

a. 5 bis 90 Gew.-Teile p-Methylstyrol,

b. 10 bis 95 Gew.-Teile mindestens eines anderen Kohlenwasserstoffes mit einer copolymerisierbaren Ungesättigtheit,

c. 0 bis 15 Gew.-Teile (einer) substituierte(n) Benzolverbindung(en),

d. 0 bis 20 Gew.-Teile konjugierte Dienverbindung und

e. 0 bis 20 Gew.-Teile ungesättigte Carbonsäureverbindung in Anwesenheit eines Katalysators vom Friedel-Crafts-Typ umgesetzt werden.

8. Verfahren nach Anspruch 7, dadurch gekennzeichnet, daß p-Methylstyrol in einer Menge von 40 bis 90 Gew.-Teilen und der andere Kohlenwasserstoff mit einer copolymerisierbaren Ungesättigtheit in einer Menge von 10 bis 60 Gew.-Teilen verwendet werden.

9. Verwendung einer harzartigen Zusammensetzung nach einem der Ansprüche 1 bis 6 oder erhalten nach dem Verfahren nach einem der Ansprüche 7 bis 8 in Kombination mit einem Elastomer, einem natürlichen oder synthetischen Kautschuk oder einem Äthylen-Vinylacetatcopolymer mit 20 bis 55 Gew.-% Vinylacetat, gegebenenfalls in Kombination mit einem Wachs und/oder einem klebrigmachenden Öl, als Schmelzkleber.

10. Schmelzkleber, dadurch gekennzeichnet, daß er zu 20 bis 60 Gew.-%, bezogen auf die Gesamtzusammensetzung, aus einer harzartigen Copolymerzusammensetzung nach einem der Ansprüche 1 bis 6 oder erhalten durch das Verfahren nach einem der Ansprüche 7 bis 8 besteht.

11. Überzug, dadurch gekennzeichnet, daß er zu 3 bis 15 Gew.-%, bezogen auf die Gesamtzusammensetzung, aus einer harzartigen Copolymerzusammensetzung nach einem der Ansprüche 1 bis 6, 2 bis 10 Gew.-% Äthylen-Vinylacetatcopolymer und 75 bis 95 Gew.-% Wachs besteht.

## Revendications

1. Composition résineuse de copolymère, appropriée pour des adhésifs et des revêtements, contenant des unités dérivés d'un monomère vinylaromatique hydrocarboné et d'au moins un autre monomère hydrocarboné comportant une insaturation copolymérisable, caractérisée en ce qu'elle comprend au moins 5% en poids d'unités paraméthylstyrène selon une proportion au moins égale à la quantité d'unités métaméthylstyrène présentes, si c'est le cas, dans cette composition de copolymère, la composition résineuse ayant un poids moléculaire moyen de 400 à 2000.

2. Composition résineuse de copolymère selon la revendication 1, caractérisée en ce que la composition de copolymère comprend au moins 25% en poids de paraméthylstyrène.

3. Composition résineuse de copolymère selon la revendication 2, caractérisée en ce que la composition de copolymère comprend au moins 40% en poids de paraméthylstyrène.

4. Composition résineuse de copolymère selon l'une quelconque des revendications 1 à 3, caractérisée en ce qu'elle consiste en paraméthylstyrène associé à au moins un monomère choisi parmi le styrène, l'α-méthylstyrène, le vinyltoluène, le bicyclopentadiène, un indène et un terpène.

5. Composition résineuse de copolymère selon la revendication 4, caractérisée en ce qu'elle contient du paraméthylstyrène associé à un ou plusieurs comonomères choisis parmi le styrène, l'α-méthylstyrène et le vinyltoluène.

6. Composition résineuse de copolymère selon l'une quelconque des revendications 1 à 4, caractérisée en ce qu'elle contient du paraméthylstyrène associé au bicyclopentadiène, ainsi qu'à un ou plusieurs comonomères choisis parmi le phénol, les (alkyle en $C_6$–$C_{10}$)phénols et les (alkyle en $C_1$–$C_6$)benzènes.

7. Procédé de préparation d'une composition résineuse de copolymère, caractérisé en ce qu'on fait réagir, en présence d'un catalyseur de Friedel et Crafts, à une température de –10 à 80°C:

a. de 5 à 90 parties en poids de paraméthylstyrène;

b. de 10 à 95 parties en poids d'au moins un autre hydrocarbure comportant une insaturation copolymérisable;

c. de 0 à 15 parties en poids d'un ou plusieurs composés benzéniques substitués;

d. de 0 à 20 parties en poids d'un composé diénique conjugué; et

e. de 0 à 20 parties en poids d'un composé dérivé d'acide carboxylique insaturé.

8. Procédé selon la revendication 7, caractérisé en ce qu'on utilise le paraméthylstyrène selon une quantité de 40 à 90 parties en poids, et l'autre hydrocarbure comportant une insaturation copolymérisable, selon une quantité de 10 à 60 parties en poids.

9. Utilisation, comme adhésifs thermofusibles, d'une composition résineuse selon l'une quelconque

des revendications 1 à 6, ou obtenue en mettant en œuvre le procédé selon la revendication 7 ou 8, en association avec un élastomère, un caoutchouc naturel ou synthétique ou un copolymère d'éthylène et d'acétate de vinyle comportant de 20 à 55% en poids d'acétate de vinyle, et éventuellement combiné avec une cire et/ou une huile adhésive.

10. Adhésif thermofusible, caractérisé en ce qu'il consiste en 20 à 60% en poids par rapport à la totalité de la composition, d'une composition résineuse de copolymère selon l'une quelconque des revendications 1 à 6, ou obtenue en utilisant le procédé selon la revendication 7 ou 8.

11. Revêtement caractérisé en ce qu'il consiste en 3 à 15% en poids par rapport à la totalité de la composition, d'une composition résineuse de copolymère selon l'une quelconque des revendications 1 à 6, en 2 à 10% en poids de copolymère d'éthylène et d'acétate de vinyle, et en 75 à 95% en poids de cire.